# EUROPÄISCHE PATENTANMELDUNG

(11) **EP 0 869 046 A2**
(43) Veröffentlichungstag der Anmeldung: **07.10.1998**
(21) Anmeldenummer: 97111817.9
(22) Anmeldetag: 11.07.1997
(51) Int. Cl.: B62B 3/00, B25H 5/00

(54) **Rollvorrichtung**

(30) Priorität: 03.04.1997 DE 29705859 U
(71) Anmelder: Kirschner, Holger, 58453 Witten (DE)
(72) Erfinder: Kirschner, Holger, 58453 Witten (DE)
(74) Vertreter: Herrmann-Trentepohl, Werner, Dipl.-Ing.

(57) **Zusammenfassung**

Bei einer Rollvorrichtung ist erfindungsgemäß vorgesehen, daß durch zwei über wenigstens einen Verbindungssteg (2) miteinander verbundene, mit Rollen - vorzugsweise Steckrollen (7) - versehbare, Auflagekörper (4, 5) zur Knieabstützung und/oder zum Transport von Gegenständen, wobei die Auflagekörper (4, 5) vorzugsweise eine gepolsterte Auflagefläche (A) aufweisen, die abschnittsweise parallel zur Abrollfäche (R) ausgerichtet ist.

## Beschreibung

Die Erfindung betrifft eine Rollvorrichtung. Derartige Rollvorrichtungen bestehen nach dem Stand der Technik beispielsweise aus einem stabilen, rechteckigen Brett, welches auf vier Rollen aufliegt und dem unkomplizierten Transport von Gegenständen wie Möbeln dient.

Im Rahmen der Neuerung hat es sich herausgestellt, daß derartige Rollvorrichtungen auf einfache Weise so weiterentwickelt werden können, daß sie auch als Roll- und Abstützvorrichtung für die Kniee einer Person geeignet sind und so neben ihrer Transportfunktion für Gegenstönde auch zum Ausführen von Arbeiten in knieender Position eingesetzt werden können, wie sie beispielsweise beim Verlegen von Fußböden eingenommen wird.

Die Neuerung geht dabei folgenden Weg: Sie schafft eine Rollvorrichtung mit zwei durch wenigstens einen Verbindungssteg miteinander verbundenen, mit Rollen - vorzugsweise Steckrollen - versehenen, Auflagekörpern zur Knieabstützung und/oder zum Transport von Gegenständen, wobei die Auflagekörper vorzugsweise eine gepolsterte Auflagefläche aufweisen, die parallel zur Abrollfläche ausgerichtet ist, welche durch die Unterseiten der Rollen definiert wird.

Diese Rollvorrichtung hat den bedeutenden Vorteil, daß mit ihr neben den üblichen Transportmöglichkeiten von - je nach Auslegung - leichteren oder auch schwereren Möbeln auch Bodenarbeiten unkompliziert ausgeführt werden können. Es wird ein universelles Hilfsmittel für den Handwerker geschaffen, welches dieser bei Gelegenheiten verschiedener Art einsetzen kann. Insbesondere die Knie-Rollfunktion ist dabei derart beschaffen, daß erstmals ein auch strengeren Sicherheitsnormen genügendes Hilfsmittel geschaffen wird, welches auch längere Bodenarbeiten ohne größere Ermüdungserscheinungen durchführbar macht: Die Kniegelenke werden geschont und die mögliche Arbeitsgeschwindigkeit wird heraufgesetzt.

Um die Knieschonfunktion zu optimieren, weisen die Auflagekörper an ihrer den Rollen abgewandten Seite eine durchgehende Polsterung auf. Die durchgehende Polsterung verbessert den Komfort der Einrichtung so, daß sich auch bei längerem Arbeitseinsatz keine Druckstellen im Kniebereich bilden. Zur ergonomischen Ausbildung der Rollvorrichtung weisen die Auflagekörper an ihren von den Rollen abgewandten Seiten ferner Ausbuchtungen auf, welche an die Knieanatomie angepaßt sind. Bevorzugt sind die Ausbuchtungen dabei an ihrer Oberfläche mit zwei zueinander parallel verlaufenden Außenseiten versehen, welche in einen die beiden Außenseiten miteinanderverbindenden Bogenabschnitt münden.

In Hinsicht auf eine kostengünstige und sichere Konstruktion der Rollvorrichtung hat sich ein schraubenfreier Aufbau aus Kunststoffelementen mit Schaumstoffpolsterung bewährt. Die Verbindungsstege können beispielsweise aus einem Leichtmetall bestehen, wobei der Abstand der Auflagekörper zueinander am Verbindungssteg verstellbar ausgelegt wird, um eine optimale Körperanpassung zu gewährleisten.

Nachfolgend wird die Neuerung anhand eines Ausführungsbeispiels unter Bezug auf die Zeichnung näher beschrieben. Es zeigt:
- Fig. 1: eine Draufsicht auf eine erfindungsgemäße Rollvorrichtung;
- Fig. 2: eine Seitenansicht der Rollvorrichtung aus Fig. 1;
- Fig. 3: eine weitere Seitenansicht der Rollvorrichtung aus Fig. 1.

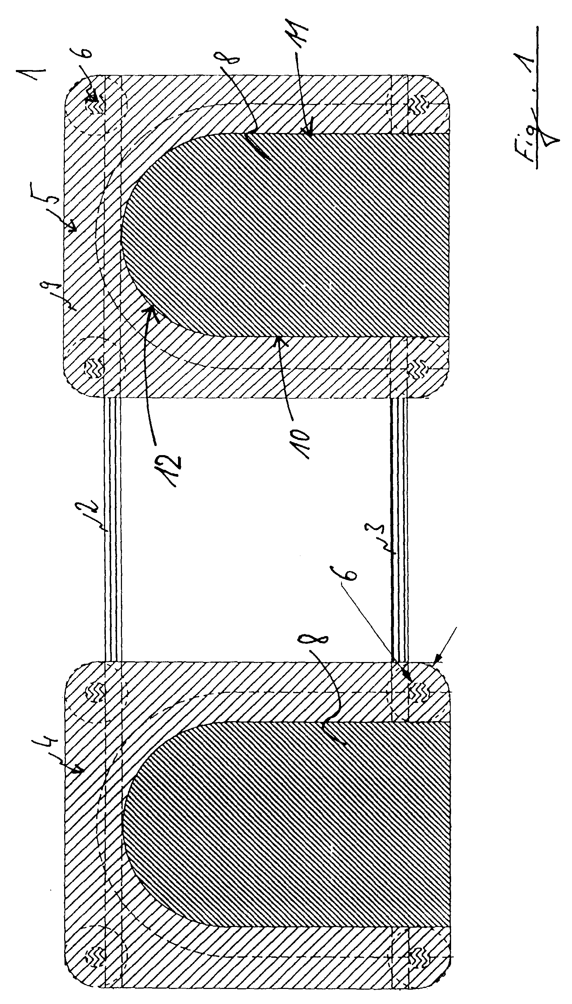

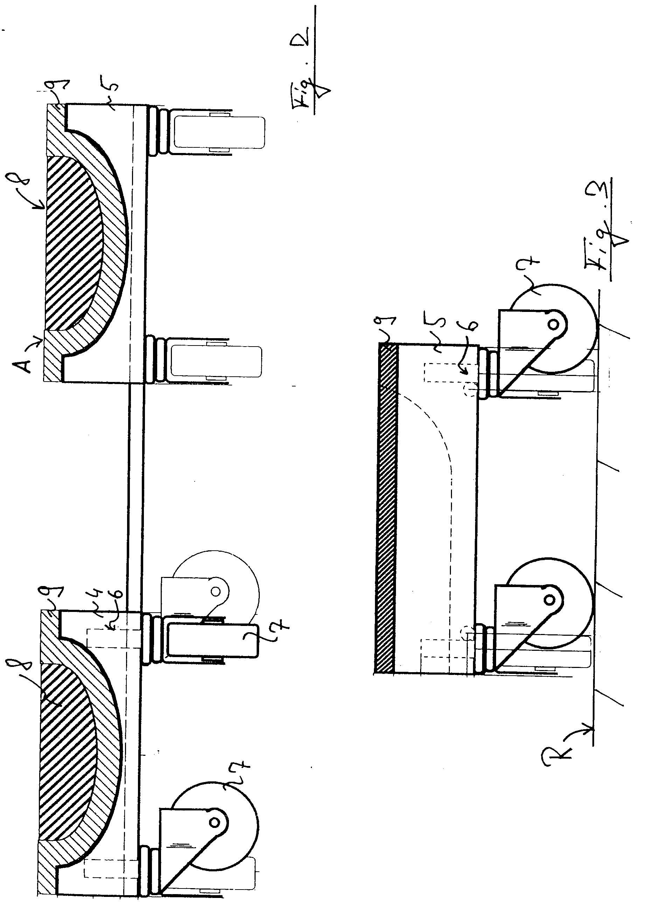

Fig. 1 zeigt eine Rollvorrichtung 1 mit zwei über schienenartige Leichtmetall-Verbindungsstege 2, 3 miteinander verbundenen, rechtwinkligen Auflagekörpern 4, 5 aus Kunststoff , welche an ihren Unterseiten jeweils vier Bohrungen 6 aufweisen, in welche Steckrollen 7 eingesetzt sind. Alternativ können auf die einzelnen oder quer über beide Auflagekörper auch Gegenstände gelegt werden. Diese Transportfunktion ist beispielsweise für den Handwerker von Interesse, der Material (z.B. Fliesen oder Mörtel) für die durchzuführenden Bodenarbeiten zu seinem Arbeitsplatz transportieren will.

Die Auflagekörper 4, 5 umfassen ferner eine gepolsterte Schaumstoff-Auflagefläche, die abschnittsweise parallel zur Abrollfläche R ausgerichtet ist, wobei die Auflagefläche von Ausbuchtungen 8 durchsetzt ist. Auf die Auflagefläche ist die Schaumstoffpolsterung 9 aufgeklebt oder mit Klebeband befestigt. Die Ausbuchtungen 8 sind an die Knieanatomie angepaßt und weisen an ihrer Oberfläche zwei zueinander parallel verlaufende Außenseiten 10, 11 auf, welche in einen die beiden Außenseiten miteinander verbindenden Bogenabschnitt 12 münden. Der gesamte Aufbau ist weitgehend schraubenfrei und derart konzipiert, daß eine Person ihre Kniee ohne weiteres in die Ausbuchtungen legen und sich dann - beispielsweise zum Verlegen von Bodenfliesen - am Boden rollend fortbewegen kann.

## Patentansprüche

1. Rollvorrichtung, gekennzeichnet durch zwei über wenigstens einen Verbindungssteg (2) miteinander verbundene, mit Rollen - vorzugsweise Steckrollen (7) - versehbare, Auflagekörper (4, 5) zur Knieabstützung und/oder zum Transport von Gegenständen, wobei die Auflagekörper (4, 5) vorzugsweise eine gepolsterte Auflagefläche (A) aufweisen, die abschnittsweise parallel zur Abrollfläche (R) ausgerichtet ist.

2. Rollvorrichtung nach Anspruch 1, dadurch gekennzeichnet, daß die Auflagekörper (4, 5) an ihren von den Rollen abgewandten Seiten jeweils eine durchgehende Polsterung (9) aufweisen.

3. Rollvorrichtung nach einem der vorstehenden Ansprüche, dadurch gekennzeichnet, daß die Auflagekörper (4, 5) an ihren von den Rollen (7) abgewandten Seiten Ausbuchtungen (8) aufweisen.

4. Rollvorrichtung nach einem der vorstehenden Ansprüche, dadurch gekennzeichnet, daß die Ausbuchtungen (8) an die Knieanatomie angepaßt sind.

5. Rollvorrichtung nach einem der vorstehenden Ansprüche, dadurch gekennzeichnet, daß die Ausbuchtungen (8) an ihrer Oberfläche zwei zueinander parallel verlaufende Außenseiten (10, 11) aufweisen, welche in einen die beiden Außenseiten miteinanderverbindenden Bogenabschnitt (12) münden.

6. Rollvorrichtung nach einem der vorstehenden Ansprüche, dadurch gekennzeichnet, daß der Abstand der Auflagekörper (4, 5) zueinander am Verbindungssteg (2) verstellbar ist.

7. Rollvorrichtung nach einem der vorstehenden Ansprüche, dadurch gekennzeichnet, daß die Auflagekörper (4, 5) aus Kunststoff und/oder die Polsterung (9) aus Schaumstoff besteh(t)en.

8. Rollvorrichtung nach einem der vorstehenden Ansprüche, dadurch gekennzeichnet, daß die Verbindungstege (2) aus Leichtmetall bestehen.
